# EUROPEAN PATENT APPLICATION

(11) **EP 2 578 962 A1**
(43) Date of publication of application: **10.04.2013**
(21) Application number: 11800211.2
(22) Date of filing: 01.06.2011
(51) Int. Cl.: F24J 2/07, F03G 6/06

(54) **COIL SOLAR RECEIVER FOR A STIRLING DISK AND METHOD FOR MANUFACTURING SAME**

(30) Priority: 02.06.2010 ES 201000729
(71) Applicant: Abengoa Solar New Technologies, S.A., 41018 Sevilla (ES)
(72) Inventor: NUÑEZ BOOTELLO, Juan Pablo, 41014 Sevilla (ES); SOSA NARANJO, Cristina, 41014 Sevilla (ES); MONNE BAILO, Carlos Miguel, 41014 Sevilla (ES); MORENO GOMEZ, Francisco, 41014 Sevilla (ES); MUÑOZ RODRIGUEZ, Mariano, 41014 Sevilla (ES)
(74) Representative: Garcia-Cabrerizo y del Santo, Pedro Maria
(86) International application number: PCT/ES2011/000178
(87) International publication number: WO 2012/001183

(57) **Abstract**

Coil solar receiver for a Stirling disk, the main components of which are pipes (where the sun hits), collectors, tanks and cupolas (of which there are two types, one that houses the regenerator, and the expansion cupola that is the area where the working gas is at a higher temperature) that includes a series of pipes (1) that perpendicularly exit from one collector (2) and perpendicularly enter another (2) and where each pipe consists of two semicircumferential curved parts (10) and three straight parts (11) parallel to one another: a center straight part (between curve and curve) and two straight parts on the ends (between the curve and the exit of one collector (2)), the two straight end parts being located on the same plane, while the center straight part is located in a separate plane.

## Description

### Technical field of the invention

The invention is framed within the technology of solar collectors and more specifically it is focused on the design of solar receivers for Stirling disk.

### Background of the invention

The Stirling disk systems are electricity generation units that use solar radiation as a source of energy. The capacity of a single unit is between 3 and 50 kWe.

The Stirling disk systems transform with high efficiency the concentrated solar radiation into electrical energy. The essential components of the system are:
- Parabolic solar concentrator.
- Tracking system.
- Stirling Engine with electric generator.
- Solar heat exchanger (solar receiver).

The mode of operation of a Stirling disk system is the following: the concentrator reflects the solar radiation to the receiver which is located at the focal point of the concentrator. The solar radiation is absorbed in the receiver and this heats the gas (helium or hydrogen) of the Stirling engine at temperatures that are around 650°C. This heat is converted into mechanical energy in the Stirling engine. An electric generator converts this mechanical energy into electricity. So that the reflected radiation hits the focal point during the entire day, a solar tracking system continually moves the concentrator to follow the path of the sun.

The technology of the solar receivers is developed depending on the type of process in which it will be used, i.e., the type of plant and the cycle used. The invention filed relates to the solar receiver plant with disc and the cycle is Stirling. Of course, it is interesting to know the background and previous developments used in solar applications. The technologies used for solar plants in tower receivers represent a reference application.

In particular, two types of receiver systems are used for the Stirling parabolic disk:
- External receiver systems.
- Cavity receiver systems.

The external receivers have absorption surfaces in direct view with the concentrators and depend on the direct absorption of the radiation. The cavity receivers have, in turn, an opening through which the concentrated radiation passes to reach the surface of the receiver. The cavity ensures that most of the radiation that enters is absorbed by the internal surface of the receiver.

The receivers most widely used for the Stirling disk systems are the cavity receivers.

The receiver is located behind the opening to reduce the amount of lost heat and to decrease the intensity of the flow concentrated on its surface. The concentrated radiation that enters through the opening of the receiver is spread inside the cavity. Most of the energy is absorbed directly by the receiver, and virtually all the remaining energy is reflected or irradiated again within the cavity to be absorbed later.

In a cavity receiver, two methods for transferring the solar radiation absorbed to the Stirling engine working fluid have been identified.

The first method consists of using a receiver of directly illuminated pipes, where small pipes through which the work fluid of the engine circulates are placed directly in the region where the concentrated solar flow hits. The pipes form the surface of the receiver. In this way the working gas is heated as it passes through the interior of the pipes heated by the solar radiation.

The second method, the reflux method, uses a liquid metal as intermediate heat transfer fluid. The liquid metal is vaporized on the back surface of the receiver and is condensed in the pipes through which the working fluid of the engine circulates. That is, it absorbs the heat from the material that forms the receiver (which is hot by the exposure to solar radiation) and then transfers it to the pipes through which the working gas of the engine circulates. This second type of receiver is called reflux receiver because the steam is condensed and returns to be evaporated again.

An important factor in the design of the receiver is the exposure to severe conditions of operation together with cyclical conditions. The high temperature is the most important factor which, together with cycle operation, gives rise to the thermal fatigue of the components. Thermal fatigue is caused by the temperature cycles, from room temperature to operation temperature, both in the starts and stops and during the moments of cloudiness. This type of cycle can cause premature failure of the receiver. Within the receiver-cavity system, the receiver component is particularly sensitive. The design of receiver pipes, incorporating thin walls and operating at even temperatures during the transient, usually has fewer problems with thermal fatigue. The long term creep of the material of the receiver and the oxidation are important considerations for choosing the materials. Chrome and nickel super alloys (Inconel ®), stainless steels, titanium and nickel alloys, nickel and cobalt alloys, etc are commonly used.

There are numerous documents which develop different receivers or aspects of the same in the state of the art. Some of them are pointed out in the following:
- DE4433203 1996 HTC Solar Solar heater head for generation of electric current from solar energy. Absorber with highly conductive material and blackened (oxidized) to homogenize the heat concentration. Preferably copper material, which is welded to the pipes of the heat exchanger with high performance stainless steel (as a sleeve of the pipe).
- US2002059798 2002 Midwest Research Institute Disk/stirling hybrid-receiver. Receiver hybrid system with sodium "heat pipe". Structure of the element made of nickel powder. It describes integration with burner system (hybrid).
- US6735946 2004 Boeing Direct illumination free piston stirling engine solar cavity. Directly illuminated piston. Without pipe exchanger. Arrangement of small pistons concentrically to the solar beam. The receiver is a metallic element made of highly conductive material such as copper, nickel or graphite. An alternative to the design is to use "heat pipes".
- US6739136 2003 Boulder, CO Arvada, CO Combustion system for hybrid solar fossil fuel receiver. Combustion system for hybrid solar fossil fuel receiver comprising a premixer that combines air and fuel for forming the mixture to be burned. There is a heat exchanger associated to and in contact with the combustion chamber. This heat exchanger provides the heat for the hybrid receiver when the heat from the sun cannot be used as energy source.
- US6818818 2004 Plano, TX Concentrating solar energy receiver. It describes a system consisting of a high reflectivity parabolic concentrator for reflecting the rays of the sun on its concave side and a conversion module that receives the concentrated solar radiation. In this conversion module, there are two different receivers; a photovoltaic receiver and a reception surface attached to a heat engine to produce electricity.
- EP0996821 2000 STM Corporation Heat engine heater assembly. An equipment designed to use both solar radiation and the heat produced by the combustion of natural gas as a power source for a heat engine is described. A housing forming the receiver allows the input of solar radiation until reaching the absorber. Series of pipes external and internal to the receiver chamber absorb the solar radiation and transmit heat to the fluid flowing inside of it. A burner inside the chamber produces combustion gases that also heat up these pipes.
- US4665700 1987 STM United Stirling AB Hot gas engine heater head. The object of the invention is to provide a heating head in which the regenerators are connected to the cylinders by pipes that surround these cylinders.
- US4602614 1986 United Stirling, Inc. Hybrid solar/combustion powered receiver. It is an improved receiver which includes a heat exchanger inside the cavity with the pipes tangentially spaced. There are multiple burners to provide a path of the combustion gases and a window to seal the opening and so there are no gas leaks out of the receiver.
- US6668555 2003 Boeing Company Solar receiver-based power generation system. This invention provides a design of improved solar receiver that reduces the cost of such mechanisms. The solar receiver includes a heat pipe that has a fluid inside of it. The heat pipe has two condenser parts arranged in two ends. Moreover, it includes an evaporator between both ends. An air collector is attached to one of the ends. This collector has an input and an output of air. A liquid collector is attached to the other end, with its respective input and output.
- US4911144 1990 Stirling Thermal Engine, Inc Spherical solar energy collector. Invention relating to a collector for solar energy and in particular to one comprising an evaporator of a heat pipe-type heat transfer system
- US4475538 1984 United Stirling AB Window for solar receiver for a solar-powered hot gas engine. Solar receiver which includes a window for the entry of the solar radiation as.an improvement.
- CA2490207A1 2004 Shecs Labs- Solar Hydrogen Solar energy collector. The invention is a receiver with an internal cavity that reflects radiation. The receiver is contained in an inert or reducing atmosphere to maintain the properties of the reflective surfaces of the cavity. The heat absorption occurs in pipes arranged symmetrically with respect to the main axis of the receiver. In addition there is a quartz window in the input of the device to reduce losses by convection.
- DE19527272: Solarer Erhitzer für Stirling-Motoren. Solar heater (1) for Stirling engine with a field of absorption (2) of parallel pipes (8), which are connected to two collectors (4, 5) through which the working gas circulates. The pipes (8) are identical to each other and have loop-shape geometry.

In view of the existing state of the art, the present invention aims to provide a solar receiver that, overcoming the deficiencies found in the previous designs:
- increases the resistance to thermal fatigue,
- minimizes the shadows between pipes,
- has directly illuminated pipes, to simplify the system avoiding the inclusion of an intermediate heat transfer fluid and an additional heat exchanger as well as to make the optical design of the concentrator more flexible and that the engine can operate in other positions different than with the sun behind it,
- does not leave gaps between the pipes when deforming by expansions, escaping the concentrated solar radiation through said gaps,
- is easily weldable,
- reduces head losses.

Thus, the new design allows to enhance the efficiency of the disc and to reduce the manufacturing and operation and maintenance costs. It also offers the possibility of:
- easily refrigerating in the case of overheating (fan),
- making the receiver independent from the cavity and the housing of the insulation that could cover it, to make it more versatile and facilitate the maintenance,
- having the possibility to integrate a hybridization burner, i.e. adding a gas burner to the Stirling engine to achieve a hybrid plant where the burner must generate a flame that heats by radiation and convection the pipes of the receiver; taking into account the design of the coil receiver, the flame would be housed in the gap defined by the pipes and heat transmission is optimized,
- simplifying the manufacturing processes and facilitating the construction.

### Description of the invention

The invention consists of a new receiver for Stirling disk that complies with the requirements defined previously.

The designed receivers comprise the following components: pipes, collectors, tanks and cupolas.
- Pipes: The pipes form the surface where the concentrated solar light beam hits. They are arranged very close to each other so that the surface has few gaps and the striking radiation can be maximized.
- Collectors: The collectors are the areas where the pipes are welded such that the flow that runs through the pipes is communicated with the tanks.
- Tanks: The tanks are the internal areas of the collectors; from here the working gas is distributed to each of the pipes.
- Cupolas: There are two cupolas: the one for housing the regenerator (or heat exchanger capable of absorbing heat from the working gas, storing it and transferring it to the same to close the cycle and it is, of the exchangers that the engine contains, the one that handles a greater volume of thermal power) and the expansion cupola (or dome cupola), which is the area where the working gas is at a higher temperature.

The receiver design claimed in this invention, called coil receiver, is composed of a series of pipes that perpendicularly exit from one collector and perpendicularly enter another.

The surfaces where the pipes are welded to the collectors are parallel to one another and perpendicular to the entrance of the pipes.

Each pipe has two 180° curves along its length so that each pipe covers almost three times the distance between the two collectors.

Specifically, each pipe emerges from the origin collector perpendicular and in a straight line towards the target collector and before reaching the target collector turns 180° going slightly down in height and comes back in a straight line, by a horizontal plane parallel and below the departure one, towards the origin collector and before reaching the origin collector turns again 180° going down a little more in height, heading again in a straight line by a horizontal plane parallel and below the target collector, where it enters perpendicular and is connected by welding. In this way, the welding point of the pipe to the origin collector is higher in height than the welding point of the pipe to the target collector.

Therefore, each pipe consists of two semicircumferences (180° curves) and three straight parts which are: the central part, between curve and curve, and the two straight parts of the ends of the pipe, which are those that are connected to the collectors. The three straight parts are parallel to each other according to horizontal planes, since all of them are at different heights, while the straight parts of the ends are in the same vertical plane, parallel to the vertical plane containing the center straight part.

Observed from the direction in which the solar radiation hits, each pipe is arranged in such a way that the straight parts of the pipe form a surface without gaps between pipes and without shading of some parts over others.

There are two vertical rows of holes in each collector for welding all the pipes. In a row all the pipes that have that collector as origin are welded and in the parallel row all the pipes that have that collector as target are welded, so that they are interspersed. This arrangement prevents the pipes of one and the other row from coming into contact.

The design of the coil-shaped receiver allows that since the pipe is developed in two different planes, the expansions (due to high temperatures) are very slightly restricted, which initially will diminish the occurrence of stresses on the pipe. Therefore, a *priori*, this design will have few problems of breakage due to excessive stresses on the material.

The arrangement at various planes of the pipes allows better cooling of the receiver by means of a fan when the temperature of the material is excessively high. Since there is greater gap between pipe and pipe, the heat transfer by convection between the air from the fan and the outer surface of the pipes will be more effective. Since there is no area of the pipes shaded by other pipes the distribution of temperatures along the pipes is more uniform.

The surface viewed by the concentrated solar radiation beam is completely compact, i.e., there are no gaps between the pipes if viewed from the predominant direction in which radiation hits.

A drawback which can be found in this design is that when the length of the pipes increases and the area of global passage decreases (sum of the passage areas of all the pipes) the associated load loss increases. This could result in a not quantified loss of engine power. But the power loss mentioned above is outweighed by the increase in the temperature of the gas. Since it has pipes of greater length, the temperature reached by the gas after it passes through the receiver is higher for the same surface temperature.

Another further advantage is that the manufacture of the pipes does not involve technical complications. The simplest procedure would be to cut a straight pipe to the suitable length and then make the corresponding curves and angles to give it the desired final shape.

Also, the welding of the pipes to the collectors does not pose problems since the distance between the holes of the collectors is sufficient to manoeuvre in welding processes without problems.

Therefore and in view of the simulations performed, it can be concluded that the overall performance of this receiver model is much better than those known in the state of the art, since it efficiently distributes the stresses and deformations caused by the temperature since the pipes have more flexibility than what is known so far.

Another aspect that should be noted is that the contribution of the gas pressure to the stresses that the receiver must withstand is negligible with respect to the stresses caused by the high temperatures. It can be said that the designed models perform better than the previous ones against the thermal loads. However, there are critical points to fatigue in the area of connection of the pipes to the collector since a flexible area (the pipe) meets a much more rigid area (the collector). This poses a problem, since when the pipe expands it is constrained by the rigidity of the collector and a point where the fracture due to fatigue may appear is created.

There are several solutions to this localized problem:
- To reduce the thickness of the area of connection of the pipes to increase the flexibility of the collector in that area.
- To place a sleeve at the critical point that serves as a transition between the two areas of different rigidity.

In view of the results obtained for each of the three solutions adopted to improve the fatigue life it can be concluded that the best solution a *priori* is the placement of the sleeve since the number of cycles that it withstands is increased by a factor of five with respect to the case without sleeve.

As for the manufacturing process of the receiver, it comprises the following steps.
- Receiving the pipes
- Bending of pipes
- Assembly of pipes to collector with furnace welding
- TIG Welding / plasma / laser for welding the tanks (made as junction of plates) to the collectors
- TIG Welding / plasma / laser .for welding the cupolas (made from a block of material) to the tanks.

Therefore, the receiver model shown as well as its manufacturing process, comply with the design constraints and improve the overall thermo-mechanical behaviour of the receivers known of the state of the art.

### Description of the drawings

To complete the description that is being made and in order to help to a better understanding of the invention, a set of drawings is accompanied where with illustrative character and without limitation, the following has been represented:
Figure 1: Solar receiver from the state of the art. Patent DE19527272.
Figure 2: Plan, elevation and cross-section of the receiver of the invention
Figure 3: Exploded view of the receiver of the invention
Figure 4: Perspective view of a pipe
Figure 5: Side view of a pipe
Figure 6: Collector

The references used in the figures correspond to the following elements:
- 1.: Pipes
- 2.: Collectors
- 3.: Expansion or dome cupola
- 4.: Cupola that houses the regenerator
- 5.: Plate for welding the collector
- 10.: Curved parts of each pipe
- 11.: Center straight part of each pipe
- 12.: Straight parts of the ends of each pipe
- 20.: Row of drill holes of the collector as origin
- 21.: Row of drill holes of the collector as target
- 22.: Drill holes of the collector

### Preferred embodiment of the invention

To achieve a better understanding of the invention, the new receiver designs for Stirling disk will be described next according to a preferred embodiment.

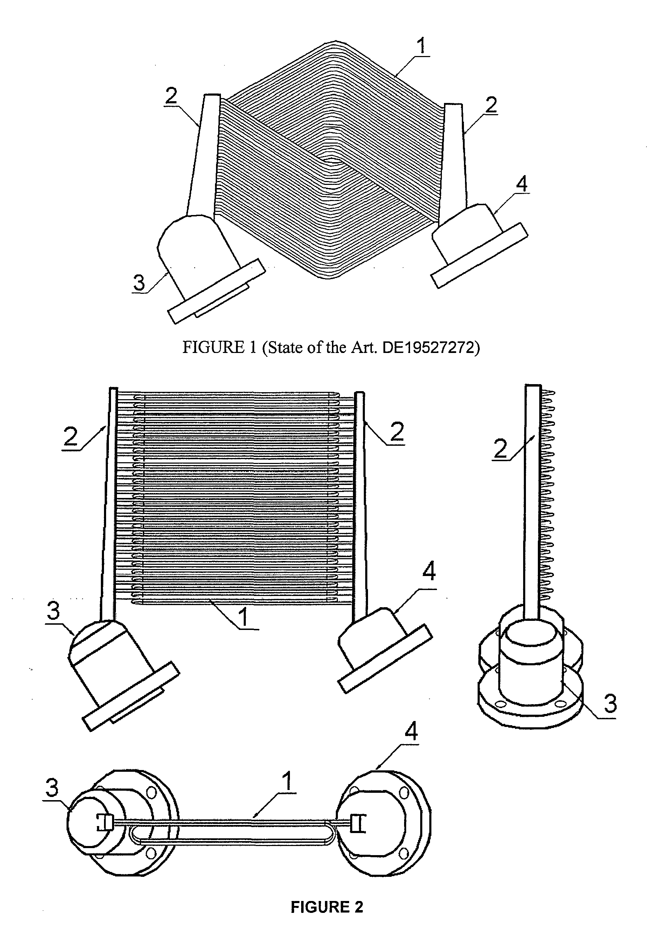

Figure 1 shows the design of a receiver from the state of the art, corresponding to patent DE19527272, in which it can be seen that it is formed by the pipes (1), the collectors (2), the expansion or dome cupola (3) and the cupola which houses the regenerator (4). In this design the pipes (1) are identical to each other and have a loop-shaped geometry (note: the references that appear here do not correspond with those of the original document, they have been modified to achieve greater consistency with the description of the invention claimed in this document).

The preferred design of the claimed receiver and shown in figures 2-6, complies with the following features:
- Commercial materials used: Inconel ® 625 or Multimet ®.
- Pipes to be used: outside diameter 3 mm and thickness 0.5 mm.
- Collectors on 3 mm plate.

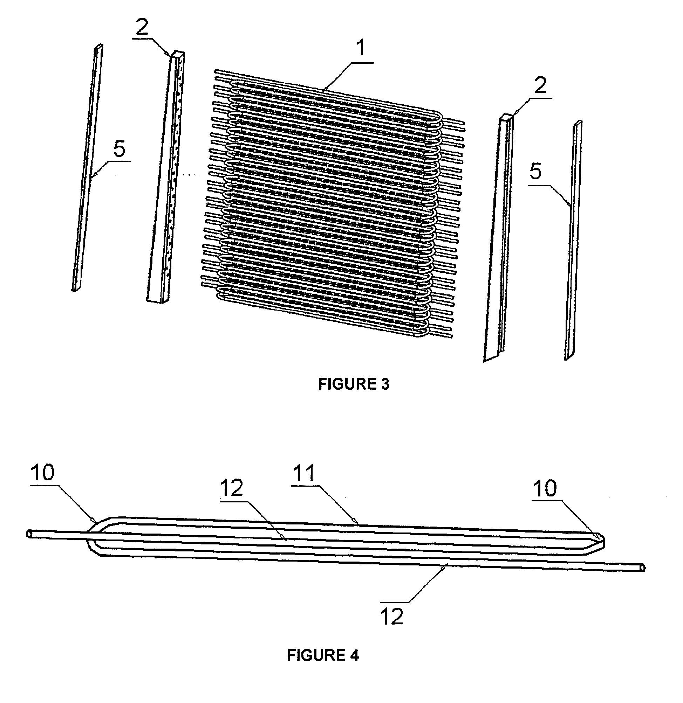

Figure 2 shows the different views of the coil model solar receiver and in figure 3 the exploded view. It is observed, that in the same way as in the patent of the state of the art of figure 1, the receiver consists of a series of pipes (1), which are attached at both ends to two collectors and resting on the regeneration (4) and expansion (3) cupolas. The biggest difference with the state of the art and where the breakthrough with regard to what exists is, lies in the design of the pipes (1). In the preferred embodiment, the receiver comprises 28 pipes (1) of a length of approximately 800 mm identical to each other and that perpendicularly exit from one collector (2) and perpendicularly entering another (2).

The surfaces or plates (5) where the collectors (2) are welded are parallel to one another and perpendicular to the entrance of the pipes (1).

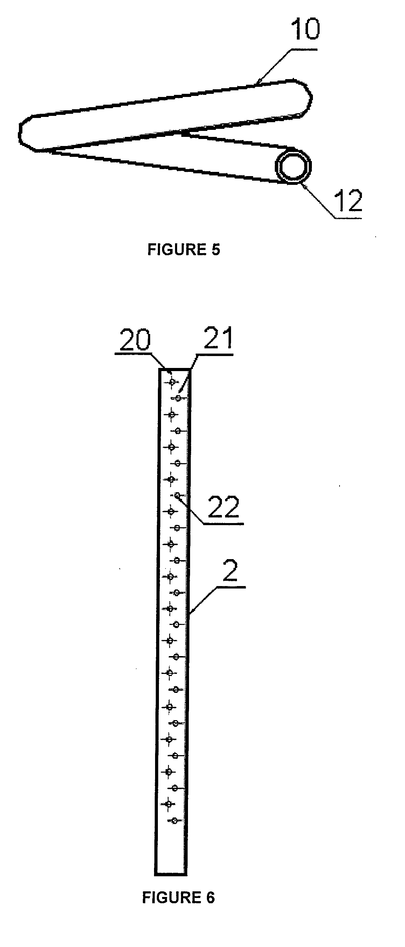

The plan view of the invention (figure 2 below) as well as figures 4 and 5 show the geometry of the pipes.

Each pipe (1) emerges from the origin collector (2) in a straight line (12) towards the target collector (2) and before reaching the target collector turns 180° (10) going slightly down in height and comes back in a straight line (11), by a horizontal plane parallel and below the departure one (12), towards the origin collector (2) and before reaching the origin collector it turns again according to a 180° curve (10) going down a little more in height, heading again in a straight line (12) by a horizontal plane parallel and below the target collector (2), where it enters perpendicular and is connected by welding.

Thus, each pipe has two 180° curves (10) along its length so that each pipe (1) covers almost three times the distance between the two collectors (2).

With this distribution it may be said that each pipe consists of three straight parts (12, 11, 12) and two curved parts (10).

In this preferred embodiment, the two curves (10) are semicircumferences with a radius of 11.1125 mm and the straight parts are: the center (11) (between curve (10) and curve (10)) of 220 mm and the ends (12) (between curve (10) and exit or entrance of a collector (2)) of 255 mm (this includes the 3 mm of pipe (1) introduced in the collector (2) for welding).

The central part (11), between curve (10) and curve (10), and the two straight parts of the ends (12) of the pipe, are parallel to each other according to horizontal planes, since all of them are at different heights, while the straight parts of the ends (12) are in the same vertical plane, parallel to the vertical plane containing the center straight part (11).

Observed from the direction in which the solar radiation hits, each pipe (1) is arranged in such a way that the straight parts (11, 12) of the pipe form a surface without gaps between pipes and without shading of some parts over others.

Figure 6 shows the collector (2). There are two vertical rows (20, 21) of drill holes (22) (each one with 14 drill holes) in each collector (2) where all the pipes (1) are welded. In a row (20) are welded all the pipes (1) that have that collector as origin and in the parallel row (21) are welded all the pipes that have that collector as target. This arrangement prevents the pipes of one (20) and the other row (21) from coming into contact.

The distance between centres of pipes (1) of the same vertical row is equal to six times the diameter of the pipe.

This system is specially designed for application in Stirling disk receivers but its extension to other fields of the industry that require similar features is not excluded.

## Claims

1. Coil solar receiver for a Stirling disk the main components of which are pipes (which form the surface where the concentrated solar light beam hits), collectors (are welded to the pipes and place the fluid that runs through the pipes in communication with the tanks), tanks (are the internal areas of the collectors from which the working gas is distributed to each of the pipes) and cupolas (of which there are two types, the one that houses the regenerator and the expansion cupola that is the area where the working gas is at a higher temperature) **characterized in that** it comprises a series of pipes (1) wherein each pipe (1) has a design such that it emerges from the origin collector (2) in a straight line (12) towards the target collector (2) and before reaching the target collector turns 180° (10) going slightly down in height and comes back in a straight line (11), by a horizontal plane parallel and below the departure one (12), towards the origin collector (2) and before reaching the origin collector it turns again according to a 180° curve (10) going down a little more in height, heading again in a straight line (12) by a horizontal plane parallel and below the target collector (2), where it enters perpendicular and is connected by welding.

2. Coil solar receiver for a Stirling disk according to claim 1 **characterized in that** the surfaces or plates (5) where the collectors (2) are welded are parallel to one another and perpendicular to the entrance of the pipes (1).

3. Coil solar receiver for a Stirling disk according to claim 1 **characterized in that** each pipe (1) is arranged in such a way that the straight parts (11) of the pipe form a surface without gaps between pipes and without shading of some parts over others.

4. Coil solar receiver for a Stirling disk according to claim 3 **characterized in that** it is formed by 28 pipes, each one of a length of approximately 800 mm.

5. Coil solar receiver for a Stirling disk according to claim 4 **characterized in that** the two 180° curves (10) are semicircumferences with a radius of 11.1125 mm and the straight parts are: the center (11) (between curve (10) and curve (10)) of 220 mm and the ends (12) (between the curve and the exit of one collector (2)) of 255 mm, including the 3 mm of pipe (1) that are introduced in the collector (2) for welding.

6. Coil solar receiver for a Stirling disk according to claim 1 **characterized in that** the materials used are nickel-chromium-based alloys (as those marketed Inconel ® 625 or Multimet ®).

7. Coil solar receiver for a Stirling disk according to claim 1 **characterized in that** the pipes (1) to be used have an outside diameter of 3 mm and a thickness of 0.5 mm and the collectors (2) are made of a 3 mm plate.

8. Coil solar receiver for a Stirling disk according to claim 1 **characterized in that** there are two vertical rows (20, 21) of drill holes (22) in each collector (2), in one row (20) are welded all the pipes (1) that have that collector as origin and in the parallel row (21) are welded all the pipes that have that collector as target and the pipes of one (20) and the other row (21) do not come into contact.

9. Coil solar receiver for a Stirling disk according to claim 8 **characterized in that** each vertical row (20, 21) of the collector (2) consists of 14 holes (6).

10. Coil solar receiver for a Stirling disk according to claim 8 **characterized in that** in each collector (2) the distance between centres of pipes of the same vertical row is equal to six times the diameter of the pipe (1).

11. Coil solar receiver for a Stirling disk according to claim 1 **characterized in that** a sleeve or pipe segment is placed (by welding, sintering or other methods) on each of the pipes (1) of the receiver in the area of connection with the collectors (2), serving as a transition between the two areas with different rigidity.

12. Method for manufacturing the coil solar receiver for a Stirling disk described in the previous claims comprising the following steps:
- Receiving the pipes
- Bending of pipes
- Assembly of pipes to collector with furnace welding
- TIG Welding / plasma / laser for welding the tanks (made as junction of plates) to the collectors
- TIG Welding / plasma / laser for welding the cupolas (made from a block of material) to the tanks.
